# NEUE EUROPÄISCHE PATENTSCHRIFT

(11) **EP 2 145 758 B2**
(45) Veröffentlichungstag und Bekanntmachung des Hinweises auf die Entscheidung über den Einspruch: **07.06.2017**
(45) Hinweis auf die Patenterteilung: 03.07.2013
(21) Anmeldenummer: 08012702.0
(22) Anmeldetag: 14.07.2008
(51) Int. Cl.: B65D 65/42, B32B 15/02, B32B 27/18

(54) **Verpackung sowie Packgut-Verpackungseinheit**
Packaging and packaging unit
Emballage et unité de matériau à emballer

(43) Veröffentlichungstag der Anmeldung: 20.01.2010
(73) Patentinhaber: 3A Technology & Management AG, 8212 Neuhausen am Rheinfall (CH)
(72) Erfinder: Yildirim, Selcuk, 8048 Zürich (CH); Jammet, Jean-Claude, 8212 Neuhausen (CH)
(74) Vertreter: Gernet, Samuel Andreas

(56) Entgegenhaltungen:
- WO-A-2004/063254
- WO-A-2007/107840
- WO-A-2008/043501
- WO-A1-01/98174
- WO-A1-2005/095216
- DE-A1- 10 010 572
- DE-A1- 10 319 006

## Beschreibung

Die Erfindung betrifft eine Verpackung mit einer mehrschichtigen Verpackungsfolie gemäß dem Oberbegriff des Patentanspruchs 1. Dabei weist die Verpakkungsfolie ein ein-oder mehrschichtiges Substrat auf, auf das eine antimikrobielle und/oder antifugale (antimykotische) Funktionsschicht als äußerste Schicht der Verpackungsfolie aufgebracht ist.

Ferner betrifft die Erfindung eine Packgut-Verpackungseinheit.

Es sind Beschichtungen für Lebensmittel-Verpackungen bekannt, die zum Schutz der verpackten Lebensmittel vor Befall durch Mikroorganismen, wie Bakterien, Pilze oder sonstige Keime eingesetzt werden. Wie sich aus der WO 2006/133754 A1 ergibt, sind dabei zwei grundsätzlich unterschiedliche Funktionsprinzipien antimikrobiell und/oder antifugal wirkender Schichten bekannt.

Das erste Funktionsprinzip zeichnet sich dadurch aus, dass die in die Schicht integrierten antimikrobiellen bzw. antifugalen Wirkstoffe flüchtig sind und mit der Zeit aus einem Matrix-Material der Funktionsschicht freigesetzt werden, wobei die antimikrobielle bzw. antifugale Wirkung nicht nur im Nahbereich der beschichteten Oberfläche sondern im gesamten Verpackungsvolumen entsteht.

Das zweite Funktionsprinzip ist **dadurch gekennzeichnet, dass** die antimikrobiell bzw. antifugal wirkenden Wirkstoffe in der Funktionsschicht derart räumlich fixiert sind, dass sie aus der Trägerschicht nicht selbstständig entweichen können. Die antimikrobielle Wirkung entfaltet sich bei derartigen Funktionsschichten erst durch einen unmittelbaren Kontakt des Packgutes mit der antimikrobiell wirkenden Oberfläche.

Es bestehen Bestrebungen, die antimikrobielle und/oder antifugale Wirksamkeit von Verpackungsfolien zu optimieren. Insbesondere sollen die antimikrobiellen bzw. antifugalen Wirkstoffe dabei für den menschlichen oder tierischen Organismus nicht toxisch sein.

Aus der US 2003/0235624 ist es bekannt, Siliziumoxid mit Silber oder Silberoxid zu dotieren um somit antimikrobiell wirkende Partikel zu schaffen. Die Dotierung erfolgt dabei durch ein Pyrolyseverfahren. Es wird vorgeschlagen, die dotierten Siliziumoxidpartikel als Füllmaterial in Farben und Beschichtungen in der Papierindustrie einzusetzen. Darüber hinaus wird ein möglicher Einsatz als Füllmaterial in der pharmazeutischen Industrie sowie in der Elektronikindustrie beschrieben.

Auch die WO 2006/084411 A1 und die WO 2006/084390 A1 beschreiben Verfahren zur Herstellung von beispielsweise mittels Silber oder Silberoxid dotiertem Siliziumoxid um ein antimikrobiell wirkendes Pulver zu erhalten. Dabei ist es bekannt, die erhaltenen Partikel zur Produktion von Lebensmittel- und/oder Getränkecontainern sowie als Füllstoff für Polymere einzusetzen.

Aus der DE 100 10 572 A1 ist eine Blisterverpackung für Borsten bekannt, in welcher als innere Schicht eine Silbersalzschicht mit antimikrobieller Wirkung vorgesehen sein kann.

Die WO 2004/063254 beschreibt allgemein eine Verpackungsfolie mit antimikrobiell wirksamen Partikeln.

Weiterhin zum Stand der Technik werden die DE 103 19 006 A1, die WO 2008/043501 A2 sowie die WO 2007/107840 A2 genannt.

Der Erfindung liegt die Aufgabe zugrunde, eine Alternative im Hinblick auf die antimikrobielle und/oder antifugale Wirkung optimierte Verpackungsfolie vorzuschlagen. Dabei soll der zum Einsatz kommende antimikrobielle Wirkstoff zum Einen bevorzugt nicht toxisch sein und zum Anderen derart angeordnet werden, dass er eine optimale Wirkung entfalten kann. Ferner besteht die Aufgabe darin, eine entsprechend verbesserte Packgut-Verpackungseinheit vorzuschlagen.

Diese Aufgabe wird hinsichtlich der Verpakkung mit den Merkmalen des Patentanspruchs 1 und hinsichtlich der Packgut-Verpackungseinheit mit den Merkmalen des Anspruchs 15 gelöst. Die dabei zum Einsatz kommende Verpackungsfolie zeichnet sich dadurch aus, dass die zumindest abschnittsweise eine äußerste Schicht der Verpackungsfolie bildende antimikrobielle und/oder antifugale Funktionsschicht, inbesondere silberhaltige, Partikel als antimikrobiellen bzw. antifugalen Wirkstoff aufweist, wobei die Partikel vorzugsweise in einer Trägermatrix aufgenommen bzw. gehalten sind. Die Erfindung hat erkannt, dass Partikel gute antimikrobielle und antifugale Eigenschaften aufweisen, die das Wachstum von Bakterien und/oder Pilzen zumindest hemmen. Die Erfindung schlägt daher vor, Partikel in eine Verpackungsfolie zum Herstellen einer Verpackung zu integrieren, wobei die Partikel bei einer nach dem Konzept der Erfindung ausgebildeten Verpackungsfolie in einer äußersten Schicht (Funktionsschicht) der Verpakkungsfolie angeordnet werden, damit die Partikel bei einer mit einer derartigen Verpackungsfolie hergestellten Verpackung unmittelbaren Kontakt zu dem verpackten Packgut, insbesondere zu Lebensmitteln, Medikamenten oder Kosmetika haben können, mit der Folge, dass die silberhaltigen Partikel in unmittelbaren Kontakt mit Mikroorganismen treten und diese schädigen, vorzugsweise abtöten können. Unter einer, zumindest abschnittsweise eine äußere Schicht der Verpackungsfolie bildenden antimikrobiellen und/oder antifugalen Funktionsschicht wird dabei eine Schicht verstanden, die zumindest in einem Flächenbereich die Außenoberfläche der Verpackungsfolie bzw. die Innenseite einer mit einer derartigen Verpackungsfolie hergestellten Verpackung bildet. Gemäß der Erfindung bildet die Funktionsschicht nicht die gesamte äußerste Schicht, sondern nur mindestens einen Teilflächenabschnitt, der bevorzugt bei einer Packgut-Verpackungseinheit unmittelbaren Packgutkontakt aufweist.

Die Erfindung betrifft eine Verpackung für Packgut, insbesondere für Lebensmittel, für Pharmazeutika oder für Kosmetika. Die Verpackung umfasst mindestens eine nach dem Konzept der Erfindung ausgebildete Verpackungsfolie, deren - antimikrobielle und/oder antifugale Partikel aufweisende Funktionsschicht, zumindest abschnittsweise, die dem Packgut zugewandte Innenseite der Verpackung bildet. Im einfachsten Fall besteht die Verpackung aus einer einzigen Verpackungsfolie die mit sich selbst versiegelt ist.

Erfindungswesentlich ist es, dass die Verpakkung als sogenannte Blisterverpackung ausgebildet ist, wobei zumindest eine Folie der Blisterverpackung als eine nach dem Konzept der Erfindung ausgebildete Verpackungsfolie ausgebildet ist, bei der die Partikel aufweisende Funktionsschicht zumindest abschnittsweise die Innenseite der Blisterverpackung bildet, also unmittelbar innen mindestens eine Kavität begrenzt und somit unmittelbaren Kontakt zum verpackten Verpackgut, insbesondere einem Lebensmittel, einem pharmazeutischen Produkt oder zu Kosmetika haben kann.

Erfindungsgemäß ist vorgesehen zusätzlich zu der Funktionsschicht eine Siegelschicht vorzusehen, die derart angeordnet ist, dass sie mindestens einen Funktionsschichtabschnitt umschließt. Dabei ist es denkbar, dass eine Siegelschicht auf die Funktionsschicht aufgebracht ist oder neben die Funktionsschicht, vorzugsweise unmittelbar auf das Substrat. Bevorzugt ist die Siegelschicht derart, beispielsweise gitterförmig aufgebracht, dass von ihr eine Vielzahl von separaten Funktionsschichtabschnitten auf der Außenoberfläche der Verpackungsfolie umschlossen sind.

Im Hinblick auf die Ausbildung der Partikel gibt es unterschiedliche Möglichkeiten. So ist es beispielsweise denkbar, dass die Partikel als Silbermetallpartikel und/oder als Silberoxidpartikel ausgebildet sind.

Bevorzugt umfassen die Partikel eine mit einem organischen oder anorganischen, antimikrobiell und/oder antifugal wirksamen Substanz dotierte organische oder anorganische Verbindung oder bestehen aus derartig dotierten Verbindungen. Beispiele für mögliche anorganische oder organische, antimikrobielle und/oder antifugal wirksame Substanzen sowie Beispiele für organische oder anorganische (Träger) Verbindungen, die mit einer entsprechenden Substanz dotiert/dotierbar sind, sind in den Druckschriften EP 1 190 622 A1, WO 2006/120135 A1 und WO 2005/107456 A2 offenbart, die hiermit als zum Offenbarungsgehalt der vorliegenden Anmeldung gehörig offenbart gelten und einzeln oder in Kombination mit mindestens einem Merkmal der vorliegenden Anmeldung beanspruchbar sein sollen.

Besonders bevorzugt ist eine Ausführungsform, bei der die in die Funktionsschicht integrierten Partikel eine silberdotierte organische oder anorganische Verbindung der Träger ist. Beispielsweise sind dies silberdotierte oder silberoxiddotierte organische oder anorganische Träger, insbesondere silber- oder silberoxiddotiertes Siliziumoxid oder silber- oder silberoxiddotierte Zeolithe. Besonders bevorzugt ist es, wenn die Partikel aus silberdotierten anorganischen Trägern, insbesondere aus silberdotiertem Siliziumoxid und/oder aus silberoxiddotierten anorganischen Trägern, insbesondere silberoxiddotiertem Siliziumoxid, bestehen. Das genannte Siliciumoxid ist insbesondere ein mit Sauerstoff angereichertes Siliciumsuboxid der allgemeinen Formel SiOx, wobei x eine Zahl von 0,65 bis 2,0, bevorzugt von 1,0 bis 1,9, sein kann. Die Partikel können auch metallhaltige Zeolite oder oberflächenmodifizierte metallhaltige Zeolite sein. Die Metalle in den Zeolithen können Silber, Kupfer, Zink, Zirkon oder Mischungen davon sein. Bevorzugt sind oberflächenmodifizierte metallhaltige Zeolite worin das Metall Silber oder eine Mischung aus Silber mit Kupfer, Zink oder Zirkon ist.

Ganz besonders bevorzugt ist es, wenn die Partikel wie in der US 2003/0235624 A1 und/oder der WO 2006/084390 A1 und/oder der WO 2006/084411 A1 offenbart ausgebildet und/oder hergestellt sind.

Bevorzugt beträgt der Silberanteil (berechnet als Silber), bezogen auf die organische oder anorganische Verbindung, demnach den Träger, wie das Siliciumoxid oder die Zeolithe, etwa 1 bis 5 Gew.-%, bevorzugt 5 Gew.-%.

Wie zuvor erwähnt ist es besonders bevorzugt, wenn die Funktionsschicht selbst siegelfähig ist.

Besonders bevorzugt ist es, wenn der Gewichtsanteil der Partikel an der Funktionsschicht der Verpackungsfolie aus einem Wertebereich zwischen etwa 0,5 Gew.% und etwa 20 Gew.%, vorzugsweise aus einem Wertebereich zwischen etwa 1 Gew.% und etwa 10 Gew.% gewählt ist.

Damit die Partikel, insbesondere die mit Silber und/oder Silberoxid dotierten organischen oder anorganischen Verbin-dungen resp. Träger, ihre optimale antimikrobielle und/oder antifugale Wirkung entfalten können, ist es bevorzugt, wenn die Partikel in der Funktionsschicht derart angeordnet sind, dass die Außenoberfläche der Funktionsschicht zum Teil von den Partikeln gebildet ist. Anders ausgedrückt bilden die Partikel zumindest einen Bestandteil der Außenoberfläche der Funktionsschicht. Bevorzugt überragen die Partikel dabei eine, beispielsweise aus Lack oder einem Polymer gebildete Trägermatrix, in der die Partikel aufgenommen sind. Ganz besonders bevorzugt ist es, wenn mindestens 10% der in der Funktionsschicht aufgenommenen Partikel an die Außenoberfläche der Verpackungsfolie ragen bzw. diese bilden. Ganz besonders bevorzugt ist es, wenn dies bei mehr als 20%, bevorzugt bei mehr als 30%, besonders bevorzugt bei mehr als 40%, ganz besonders bevorzugt bei mehr als 50% der Partikel der Fall ist. Optimal ist es, wenn zwischen 70% und 100% der in der Funktionsschicht aufgenommenen Partikel an die Außenoberfläche der Verpackungsfolie ragen.

In Weiterbildung der Erfindung ist mit Vorteil vorgesehen, dass die mittlere Dicke der Funktionsschicht derart gewählt ist, dass zumindest ein Teil, vorzugsweise beispielsweise 30 bis 90%, vorzugsweise 50 bis 90%, der Partikel an die Außenoberfläche der Verpackungsfolie ragen bzw. diese mitbilden. Dies kann dadurch erreicht werden, indem die mittlere Dicke der Funktionsschicht geringer gewählt wird als der Medianwert der mittleren Durchmesser der Partikel. Dabei wird unter dem mittleren Durchmesser der Partikel das arithmetische Mittel aus einem minimalen und einem maximalen Durchmesser der Partikel verstanden und unter dem Medianwert der mittlere Durchmesser einer Partikelverteilung verstanden, der einen Durchgangssummenwert von 50% aufweist, d. h. 50% der mittleren Partikeldurchmesser sind kleiner und 50% sind größer als dieser Wert. Bevorzugt beträgt der mittlere Durchmesser der Partikel etwa 1 µm bis etwa 20 µm.

Besonders bevorzugt ist eine Ausführungsform, bei der der Verhältniswert aus der mittleren Dicke der Funktionsschicht und dem Medianwert der mittleren Durchmesser der silberhaltigen Partikel kleiner als 0,8, vorzugsweise kleiner als 0,5 ist.

Im Hinblick auf die Ausbildung der Funktionsschicht bzw. die Bildung der Funktionsschicht gibt es unterschiedliche Möglichkeiten. So kann die Funktionsschicht aus einem, insbesondere druckfähigen Lack oder aus einem Folienfilm gebildet sein. Dabei sind die Partikel vorzugsweise gleichmäßig in dem Lack bzw. dem Folienfilm verteilt angeordnet. Anders ausgedrückt sind die Partikel in einer Lackmatrix bzw. Folienmatrix aufgenommen. Im Falle der Ausbildung der Funktionsschicht als Folienfilm ist es bevorzugt, wenn die Partikel in einer Polymermatrix aufgenommen sind.

Je nachdem, ob die Funktionsschicht als insbesondere druckbarer Lack oder als Folienfilm ausgebildet ist, kann die Funktionsschicht als Lack durch Drukken, Rakeln, Bürsten, Streichen, Sprühen, Gießen oder als Film durch Giessen, Extrudieren, Kaschieren oder Co-Extrusion auf das Substrat aufgebracht werden. Beispielsweise können die Partikel in einem vorzugsweise durch Co-Extrusion auf ein Substrat aufgebrachten Film aus LDPE eingebracht sein, wobei die Partikel zur Herstellung des Films beispielsweise in einen Polyethylen-Masterbatch eingebracht werden können. Der Silbergehalt in den Partikeln kann beispielsweise 1 bis 50 Gew.-% betragen, wobei 3 bis 10 Gew.-% zweckmässig und 5 Gew.-% bevorzugt sind. Der Masterbatch kann beispielsweise 70 bis 95 Gew.-% Polyethylen und 5 bis 30 Gew.-% Partikel, insbesondere 15 Gew.-% Partikel, enthalten. Aus 1 bis 30 Gew.-%, vorzugsweise 3 bis 8 Gew.-%, insbesondere 5 Gew.-%, des Masterbatches und 70 bis 99 Gew.-%, vorzugsweise 92 bis 97 Gew.-% eines Polymers, wobei Mischungen aus Polyethylen und Ethylvinylacetat oder aus Polyethylen und Ethylvinylmethylacrylat als Polymer bevorzugt sind, wird die Funktionsschicht erzeugt. Die Konzentration von Masterbatch und Polymer in der Funktionsschicht kann derart abgestimmt werden, dass bevorzugt 0,25 bis 1,5 Gew.-% und insbesondere bevorzugt 0,5 bis 1,0 Gew.-%, Partikel in der Funktionsschicht vorhanden sind. In weiterer bevorzugter Ausführungsform weisen die Polymere der Funktionsschicht hydrophile Polymere oder hydrophile Gruppen in den Polymeren oder hydrophile Polymerreste auf. Die hydrophilen Bestandteile in der Funktionsschicht können die antimikrobielle und/oder antifugale Wirkung der Funktionsschicht erhöhen.

Das Substrat an sich ist in der Regel ein folienförmiges Material, wie eine ein- oder mehrschichtige Kunststofffolie oder eine Metallfolie oder eine Kombination einer oder mehrerer Kunststofffolien mit einer oder mehrerer Metallfolien. Kunststofffolien können Polyolefine, wie Polyethylenen, Polypropylen oder Polybutylen enthalten. Polyethylene niedriger Dichte (LDPE) sind bevorzugt. Weitere zu nennende Kunststoffolien, sind Folien aus Polyamiden, Polyestern, wie Polyethylenterephthalat (PET), Polyvinylchlorid, Ionomerharzen, Polyacrylaten, usw. Metallfolien sind beispielsweise Aluminium- oder Stahlfolien. Die genannten Folien können allein oder in einem gegenseitigen Verbund von zwei und mehr Schichten Verbund zu mehrschichtigen Folien aus gleichen oder verschiedenen Folien das Substrat oder Teil des Substrates bilden. Typische Dicken der einzelnen Folien oder Filme reichen von beispielsweise 7 bis 100 µm, wobei Dicken von 12 bis 30 µm bevorzugt sind. Das Substrat kann auf einer oder auf beiden Aussenseiten, ganz oder abschnittsweise, mit der Funktionsschicht belegt sein. Die Dicke des Substrates kann beispielsweise ca. 75% der Dicke und die einzelne Funktionsschicht ca. 25% der Dicke des Verpackungsmaterials ausmachen. Wird das Substrat beidseitig mit der Funktionsschicht belegt, kann die Dicke des Substrates ca. 60% und jede der beiden Funktionsschichten je ca. 20% des Substrates ausmachen.

Besonders bevorzugt ist es, wenn das ein- oder mehrschichtige Substrat mindestens eine Funktionschichicht umfasst oder als solche ausgebildet ist. Das Substrat kann beispielsweise als Barriereschicht ausgebildet werden oder kann wenigstens eine Barriereschicht enthalten. Fallweise kann die Funktionsschicht Barrierewirkung oder in einer Schichtanordnung des Substrates kann die Funktionsschicht Barrierewirkung aufweisen. Die Barriereschicht kann beispielsweise gegen Sauerstoff, und/oder Kohlendioxid und/oder Wasser wirksam ist. Besonders bevorzugt ist es, wenn die mindestens eine Barriereschicht des Substrates zur Optimierung der Barriereeigenschaften als Metallschicht ausgebildet ist. Besonders bevorzugt handelt es sich dabei um eine aluminiumhaltige Schicht, zweckmäßig eine Aluminiumschicht, vorzugsweise um eine Aluminiumfolie, bestehend aus reinem Aluminium oder einer Aluminiumlegierung. Alternativ kann die Barriereschicht auch auf Stahlbasis ausgebildet werden.

Zusätzlich oder alternativ ist eine Ausbildung der Barriereschicht auf Basis eines Kunststoffes, insbesondere einer Kunststofffolie, beispielsweise aus Polyestern, wie Polyethylenterephthalaten (PET), aus Polyamiden (PA), aus Polyethylvinylalkohol (EVOH), Polyacrylnitril, Acrylnitril-Methylacrylat-Copolymerisate, Polyvinylidenchlorid etc. mit einer auf wenigstens einer der Oberflächen der Folie befindlichen Barriereschicht ausgebildet. Als Barriereschicht können dabei physikalisch oder chemisch abgeschiedene keramische Schutzschichten oder Sol-Gel-Schichten Anwendung finden.

Keramische Schichten können beispielsweise die allgemeine Formel SiOₓ, wobei x eine Zahl von 1,1 bis 2,0, zweckmäßig eine Zahl von 1,5 bis 1,9, bevorzugt eine Zahl von 1,5 bis 1,8 bedeutet, oder die allgemeine Formel Al_{y}O_{z}, wobei y: z = 0,5 bis 1, zweckmäßig y: z = 0,6 bis 0,7 ergibt, oder vorzugsweise y die Zahl 2 und z die Zahl 3 ist, haben.

Die physikalisch abgeschiedenen keramischen Schichten (PVD-Schichten) sind erhältlich beispielsweise durch das Verfahren der Vakuumdünnschichttechnik durch Verdampfen von Targetmaterialen im Vakuum und Niederschlagen der verdampften Materialien auf der Kunststofffolie unter Ausbildung der keramischen Schicht. Die keramischen Schichten können beispielsweise eine Dicke von 10 bis 2000 nm aufweisen.

Chemisch abgeschiedene keramische Schichten (CVD-Schichten) können beispielsweise aus einer Lösung von Perhydropolyzilasan (PHPS), welches auf die zu beschichtende Oberfläche aufgetragen und danach unter Ausbildung einer Siliziumschicht (SiOx) ausgehärtet wird, erzeugt werden. Solche Schichten sind mit PVD-Schichten kombinierbar.

Sol-Gel-Schichten können mittels vernetzbaren organischen funktionellen Silanen, die mit einer Metallverbindung, beispielsweise durch hydrolytische Kondensation, ggf. in Gegenwart eines Kondensationskatalysators, erhalten werden,
wobei die Beschichtungslösung auf ein Substrat aufgebracht und anschließend ausgehärtet werden kann.

Ebenso ist es möglich (zusätzlich oder alternativ) die Barriereschicht als mehrlagige Folie mit wenigstens einem eine Sperrwirkung oder Barriereeigenschaft aufweisenden Polymer auszubilden. Beispielsweise sind folgende Schichtanordnungen realisierbar:
- Polyolefin, Polyester oder Polyamid/ EVOH/ Polyolefin, Polyester oder Polyamid
- Polyolefin/ Polyamid/ Polyolefin
- Polyolefin/PVdC/ Polyolefin
- Polyolefin/ Polyacrylnitril/ Polyolefin
- Polyester oder Polyamid/ EVOH.

Die einzelnen Schichten solcher mehrlagiger Folien können als nicht orientierte, monoaxial orientierte oder biaxial orientierte Folien vorliegen.

Besonders bevorzugt ist eine Ausführungsform, bei der das Substrat eine Haftverbesserungsschicht umfasst, die auf einer der die Partikel umfassenden Funktionsschicht zugewandten Seite aufgebracht ist.

Besonders bevorzugt ist es, das Substrat auf der der Funktionsschicht zugewandten Seite, insbesondere vor dem Aufbringen der Funktionsschicht, zu strukturieren, derart, dass die Funktionsschicht eine vergrößerte Oberfläche erhält um somit den Anteil von Partikeln an der Außenoberfläche der Funktionsschicht zu vergrößern. Zusätzlich oder alternativ ist es möglich, die Funktionsschicht nach und/oder während des Aufbringens zu strukturieren, insbesondere derart, dass ansonsten im Inneren liegende (vollständig eingeschlossene) Partikel an die Außenoberfläche treten und somit die antimikrobielle bzw. antifugale Wirkung der Funktionsschicht verstärken.

Darüber hinaus führt die Erfindung auf eine Packgut-Verpackungseinheit mit einer zuvor beschriebenen Verpackung. Dabei ist es wesentlich, dass die Partikel aufweisende Funktionsschicht der Verpakkungsfolie der Verpackung unmittelbaren Kontakt zum Packgut hat.

In weiteren Ausführungsformen kann Verpakkungsmaterial, welches die antimikrobielle oder antifugale Partikel aufweisende Funktionsschicht, zumindest abschnittsweise, vorzugsweise vollständig, ein- oder beidseitig, angeordnet, zu Blättern, Abschnitten oder Bögen verarbeitet, wie geschnitten, sein. Derartige Blätter, Abschnitte oder Bögen können wechselweise mit dem jeweiligen mehrteiligen Füllgut geschichtet in der Verpackung untergebracht sein. Es können auch Zwischenwände im Verpackungsbehälter aus Verpackungsmaterial, welches die antimikrobielle oder antifugale Partikel aufweisende Funktionsschicht, zumindest abschnittsweise, vorzugsweise vollständig, enthält, vorhanden sein.
In vorstehend genannten zusätzlichen Ausführungsformen bei denen Verpackungsmaterial als Zwischenlage oder Trennlage verwendet wird, können die Verpakkungsbehälter, aus konventionellen Verpackungsmaterialien aufgebaut sein; oder die Verpackungsbehälter können aus vorliegenden erfinderischen Verpackungsfolien mit der Funktionsschicht aufgebaut sein.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: einen Ausschnitt eines ersten Ausführungsbeispiels einer Verpackungsfolie, aufweisend ein ein- oder mehrschichtiges Substrat, auf das eine silberhaltige Partikel aufweisende Funktionsschicht aufgebracht ist, wobei eine äußerste Schicht der Verpackungsfolie volkständig von der Funktionsschicht gebildet ist;
- Fig. 2: ein alternatives Ausführungsbeispiel einer Verpackungsfolie mit einer silberhaltige Partikel aufweisenden Funktionsschicht, die abschnittsweise eine äußerste Schicht der Verpackungsfolie bildet;
- Fig. 3: ein weiteres alternatives Ausführungsbeispiel einer Verpackungsfolie, bei der die mittlere Dikke der Funktionsschicht im Verhältnis zum mittleren Partikeldurchmesser der silberhaltigen Partikel gering ist, und
- Fig. 4: eine als Blisterverpackung ausgebildete Verpackung, bestehend aus einer mit einer Bodenfolie gesiegelten Deckfolie, die abschnittsweise als äußerste Schicht eine silberhaltige Partikel aufweisende Funktionsschicht aufweist.

In den Figuren sind gleiche Bauteile und Bauteile mit der gleichen Funktion mit den gleichen Bezugszeichen gekennzeichnet.

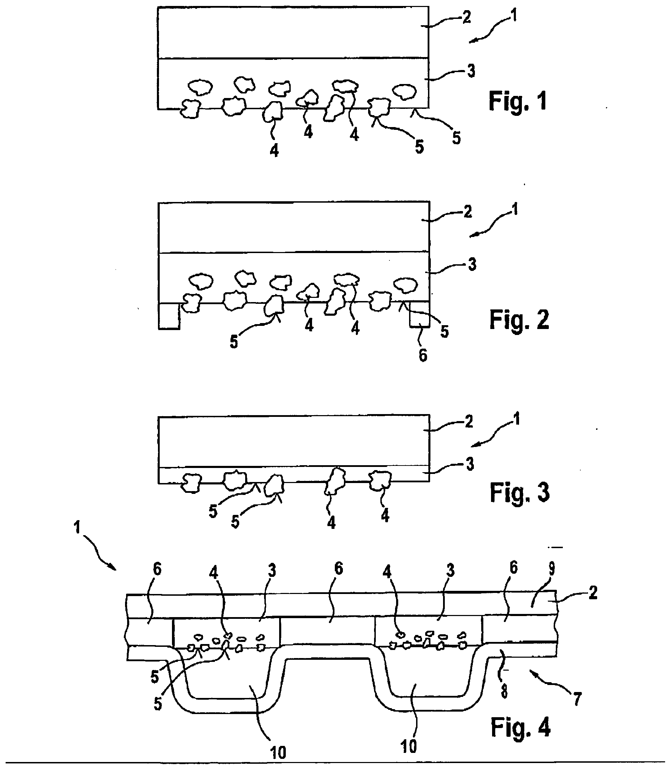

In Fig. 1 ist ein Ausschnitt einer mehrschichtigen Verpackungsfolie 1 gezeigt. Diese umfasst ein ein- oder mehrschichtiges Substrat 2, auf das eine Funktionsschicht 3 aufgebracht ist. Die Funktionsschicht 3 kann beispielsweise als Lack oder als Kunststofffilm ausgebildet sein. Die Funktionsschicht 3 umfasst eine Vielzahl von silberhaltigen Partikeln 4, wobei die silberhaltigen Partikel 4 in dem gezeigten Ausführungsbeispiel aus silberdotiertem Siliziumoxid gebildet sind. Die Funktionsschicht 3 bildet über ihre gesamte Flächenerstreckung eine äußerste Schicht der Verpackungsfolie 1, die bei einer aus einer derartigen Verpackungsfolie 1 hergestellten Verpackung die Innenoberfläche der Verpackung bildet. Bei dem Ausführungsbeispiel gemäß Fig. 1 handelt es sich bei der Funktionsschicht 3 um eine siegelfähige Schicht.

Wie sich aus Fig. 1 ergibt, sind ein Teil der silberhaltigen Partikel 4 vollständig in der Funktionsschicht 3 aufgenommen und haben keinen Kontakt zur Außenoberfläche bzw. sind nicht Teil der Außenoberfläche 5 der Verpackungsfolie 1 bzw. der Funktionsschicht 3. Dies ist darauf zurückzuführen, dass der mittlere Durchmesser der silberhaltigen Partikel 4 geringer ist als die Dicke der Funktionsschicht 3.

Wesentlich ist, dass einige, hier beispielhaft 50%, der silberhaltigen Partikel 4 Bestandteil der Außenoberfläche 5 sind, wodurch Mikroorganismen wie Bakterien und Pilze in unmittelbaren Kontakt zu den silberhaltigen Partikeln 4 kommen können, sodass diese ihre antimikrobielle und/oder antifugale Wirkung entfalten können.

Im Hinblick auf die antimikrobielle Aktivität einer in Fig.1 beispielhaft gezeigten Verpackungsfolie 1 wurden Vergleichstests durchgeführt, wobei zum einen eine Verpackungsfolie zum Einsatz kam, bei der das Substrat von einer Aluminiumfolie und die Funktionsschicht von einem heißsiegelfähigen Lack mit einem 3 %igen Anteil an silberdotierten Siliziumoxidpartikeln gebildet wurde. Verglichen wurde die antimikrobielle Wirkung dieser (zuvor beschriebenen) Verpackungsfolie mit einer Verpakkungsfolie mit analogem Aufbau, jedoch ohne silberdotierte Siliziumoxidpartikel. Dabei wurde bei der die silberdotierten Siliziumoxidpartikel aufweisenden Verpakkungsfolie eine starke Hemmung des Wuchses von Escherichia Coli und Listerien beobachtet, wohingegen das Wachstum dieser Organismen bei einer Verpakkungsfolie ohne die silberdotierten Siliziumoxidpartikel nicht gehemmt wurde.

In Fig. 2 ist ein alternatives Ausführungsbeispiel einer Verpackungsfolie 1, umfassend ein Substrat 2 mit darauf aufgebrachter Funktionsschicht 3 gezeigt. Zu erkennen ist, dass die Funktionsschicht 3, die beispielsweise aus einem Lack oder aus einem Kunststofffilm gebildet sein kann, silberhaltige Partikel 4 umfasst, die in dem gezeigten Ausführungsbeispiel aus silberoxiddotiertem Siliziumoxid gebildet sind. Zu erkennen ist, dass ein erheblicher Teil der silberhaltigen Partikel 4 eine Außenoberfläche der Funktionsschicht 3 bildet. Wie sich weiter aus Fig. 2 ergibt, weist die Verpackungsfolie 1 in der Zeichnungsebene unten zwei äußerste Schichten auf, nämlich die Funktionsschicht 3 sowie eine strukturiert auf die Funktionsschicht 3 aufgebrachte siegelfähige Siegelschicht 6, die einen Abschnitt der Funktionsschicht ringförmig umgibt, wobei unter ringförmig nicht notwendigerweise ein Kreisring sondern jede umfangsgeschlossene (Ring-) Form verstanden wird. Anstelle der gezeigten Variante mit auf die Funktionsschicht 3 aufgebrachter Siegelschicht 6 ist es denkbar, dass die Siegelschicht 6 benachbart in einer Ebene zur Funktionsschicht 3 unmittelbar auf das Substrat 2 aufgebracht ist.

In Fig. 3 ist ein weiteres alternatives Ausführungsbeispiel einer Verpackungsfolie 1, umfassend ein ein- oder mehrschichtiges Substrat 2 sowie eine darauf aufgebrachte Funktionsschicht 3 gezeigt. Aus der Darstellung gemäß Fig. 3 ergibt sich, dass die silberhaltigen Partikel 4 einen größeren mittleren Durchmesser aufweisen als die Funktionsschicht 3 in einem Bereich zwischen zwei entlang der Flächenerstreckung der Verpackungsfolie 1 nebeneinander angeordneten silberhaltigen Partikeln 4, sodass die silberhaltigen Partikel 4 sowohl Kontakt zum Substrat 2 haben als auch Bestandteil der Außenoberfläche 5 der Funktionsschicht 3 sind.

Bei sämtlichen in den Fig. 1 bis 3 gezeigten Ausführungsbeispielen kann das Substrat 2 vor dem Aufbringen der Funktionsschicht 3 strukturiert werden, sodass die Funktionsschicht 3 eine im Vergleich zu einem unstrukturierten, ebenen Substrat größere Oberfläche einnimmt. Ebenso ist es denkbar, dass die Funktionsschicht 3 nach dem Aufbringen strukturiert wird, wodurch, insbesondere bei den Ausführungsbeispielen gemäß Fig. 1 und 2 ansonsten vollständig eingeschlossene silberhaltige Partikel 4 Bestandteil der dann vergrößerten Oberfläche der strukturierten Funktionsschicht bilden, wodurch die antimikrobielle Wirkung der Funktionsschicht 3 verbessert wird. Dies ist darauf zurückzuführen, dass in diesem Fall ein größerer Flächenanteil der Außenoberfläche 5 von silberhaltigen Partikeln 4 gebildet ist.

In Fig. 4 ist eine als Blisterverpackung ausgebildete Verpackung 7 gezeigt. Diese Verpackung 7 ist gebildet aus einer Bodenfolie 8, die ein- oder mehrschichtig ausgebildet sein kann. Bevorzugt umfasst die Bodenfolie 8 mindestens eine aluminiumhaltige Schicht oder ist als aluminiumhaltige Schicht ausgebildet. Auf die Bodenfolie 8 ist eine Deckfolie 9 gesiegelt, wobei die Deckfolie 9 als Verpackungsfolie 1 ausgeführt ist, die beispielsweise wie in den Fig. 1 bis 3 gezeigt und zuvor beschrieben ausgebildet sein kann. Die Verpackungsfolie 1 umfasst in dem gezeigten Ausführungsbeispiel gemäß Fig. 4 ein ein- oder mehrschichtiges Substrat 2, auf das abschnittsweise eine Funktionsschicht 3, umfassend silberhaltige Partikel 4, aufgebracht ist. Zum Teil bilden die silberhaltigen Partikel eine Außenoberfläche 5 der Verpackungsfolie 1, wobei diese Außenoberfläche 5 die Innenfläche der Verpackung 7 bzw. die Innenwand von in der Bodenfolie 8 vorgesehenen und von der Verpakkungsfolie 1 überdeckten Kavitäten 10 bildet, in denen nicht gezeigtes Packgut, beispielsweise Medikamente aufgenommen sein können. Jeweils benachbart zu den Funktionsschichtabschnitten befindet sich eine Siegelschicht 6, die die Funktionsschichtabschnitte ringförmig umgibt und die nicht wie beim Ausführungsbeispiel gemäß Fig. 2 auf die Funktionsschicht 3, sondern neben die Funktionsschicht 3 unmittelbar auf das Substrat 2 aufgebracht, insbesondere aufgedruckt ist. Die Siegelschicht 6 (hier nicht die Funktionsschicht 3) ist in der Zeichnungsebene unten mit der Bodenfolie 8 gesiegelt.

## Patentansprüche

1. Verpackung für Packgut, umfassend mindestens eine Verpackungsfolie aufweisend ein ein- oder mehrschichtiges Substrat (2) und eine auf das Substrat (2) aufgebrachte, zumindest abschnittweise eine äußerste Schicht der Verpackungsfolie (1) bildende antimikrobielle und/oder antifugale Funktionsschicht (3), wobei die Funktionsschicht (3) Partikel (4) als antimikrobiellen und/oder antifugalen Wirkstoff aufweist, deren Partikel (4) aufweisende Funktionsschicht (3), zumindest abschnittsweise, die dem Packgut zugewandte Innenseite der Verpackung (7) bildet, wobei die Verpackung (7) eine Blisterverpackung mit mindestens einer Kavität (10) aufweisenden Bodenfolie (8) und einer mit der Badenfolie (8) gesiegelten, die Kavität (10) überdeckenden Deckelfolie (9) ist, und wobei die Bodenfolie (8) und/oder die Deckelfolie (9) aus einer Verpackungsfolie (1) gebildet ist, **dadurch gekennzeichnet, dass** eine, abschnittsweise eine äußerste Schicht der Verpackungsfolie (1) bildende Siegelschicht (6) vorgesehen ist, die mindestens einen Funktionsschicht umschließt und wobei die mittlere Dicke der Funktionsschicht (3) geringer ist als der Medianwert der mittleren Durchmesser der Partikel (4).

2. Verpackung nach Anspruch 1,
**dadurch gekennzeichnet,**
**dass** die Partikel (4) als Silbermetallpartikel und/oder als Silberoxidpartikel ausgebildet sind, oder dass die silberhaltigen Partikel (4) Silbermetall und/ oder Silberoxid umfassen.

3. Verpackung nach einem der vorhergehenden Ansprüche, **dadurch gekennzeichnet,**
**dass** die Partikel (4) eine mit mindestens einer antimikrobiell und/oder antifugal wirkenden anorganischen oder organischen Substanz dotierte anorganische oder organische Verbindung aufweisen, oder dass die Partikel aus derartigen Verbindungen bestehen.

4. Verpackung nach einem der Ansprüche 1 oder 2,
**dadurch gekennzeichnet,**
**dass** die Partikel (4) eine silberdotierte organische oder anorganische Verbindung, insbesondere silberdotiertes Siliziumoxid, und/oder eine silberoxiddotierte organische oder anorganische Verbindung, insbesondere silberoxiddotiertes Siliziumoxid, umfassen, oder dass die silberhaltigen Partikel (4) aus silberdotierten organischen oder anorganischen Verbindungen, insbesondere silberdotiertem Siliziumoxid, und/oder aus silberoxiddotierten organischen oder anorganischen Verbindungen bestehen.

5. Verpackung nach einem der vorhergehenden Ansprüche, **dadurch gekennzeichnet,**
**dass** die Funktionsschicht (3) siegelfähig ist.

6. Verpackung nach einem der vorhergehenden Ansprüche, **dadurch gekennzeichnet,**
**dass** der Gewichtsanteil der Partikel (4) an der Funktionsschicht (3) aus einem Wertebereich zwischen etwa 0,5 Gew.% und etwa 20 Gew.%, vorzugsweise aus einem Wertebereich zwischen etwa 1 Gew.% und etwa 10 Gew.%, gewählt ist.

7. Verpackung nach einem der vorhergehenden Ansprüche, **dadurch gekennzeichnet,**
**dass** zumindest ein Teil, insbesondere mindestens 10%, vorzugsweise mindestens 20%, bevorzugt mindestens 30%, besonders bevorzugt mindestens 40%, ganz besonders bevorzugt mindestens 50%, der Partikel (4) einen Teil der Außenoberfläche (5) der Funktionsschicht (3) bilden.

8. Verpackung nach einem der vorangehenden Ansprüche, **dadurch gekennzeichnet, dass** der mittlere Durchmesser der Partikel (4) 1µm bis 20µm beträgt.

9. Verpackung nach einem der vorhergehenden Ansprüche, **dadurch gekennzeichnet,**
**dass** der Verhältniswert aus der mittleren Dicke der Funktionsschicht (3) und dem Medianwert der mittleren Durchmesser der Partikel (4) kleiner als 0,8, vorzugsweise kleiner als 0,5, ist.

10. Verpackung nach einem der vorhergehenden Ansprüche, **dadurch gekennzeichnet,**
**dass** die Funktionsschicht (3) aus einem, die Partikel (4) aufweisenden Lack, oder aus einem die silberhaltigen Partikel (4) aufweisenden Folienfilm, gebildet ist.

11. Verpackung nach einem der vorhergehenden Ansprüche,
**dadurch gekennzeichnet,**
**dass** die Funktionsschicht (3) durch Drucken, Rakeln, Bürsten, Streichen, Sprühen, Gießen, oder durch Co-Extrusion auf das Substrat (2) aufgebracht ist.

12. Verpackung nach einem der vorhergehenden Ansprüche,
**dadurch gekennzeichnet,**
**dass** das Substrat (2) mindestens eine funktionale Schicht (3), insbesondere eine Barriereschicht, insbesondere wirksam gegen Sauerstoff und/oder Kohlendioxid und/oder Wasser, aufweist oder als solche ausgebildet ist.

13. Verpackung nach einem der vorhergehenden Ansprüche,
**dadurch gekennzeichnet,**
**dass** das Substrat (2) und/oder die Funktionsschicht (3) strukturiert ist/sind.

14. Verpackung nach einem der vorhergehenden Ansprüche,
**dadurch gekennzeichnet,**
**dass** die Verpackung als Lebensmittelverpackung, pharmazeutische Produkt-Verpackung oder Kosmetika-Verpackung ausgebildet ist.

15. Packgut-Verpackungseinheit mit einer Verpackung (7) nach einem der Ansprüche 1 bis 14,
**dadurch gekennzeichnet,**
**dass** die silberhaltige Partikel (4) aufweisende Funktionsschicht (3) der Verpackungsfolie (1) der Verpackung (7) unmittelbaren Kontaktzum Packgut hat.

## Claims

1. Packaging for goods, comprising at least one packaging film which comprises a single-layer or multi-layer substrate (2) and an antimicrobial and/or antifungal functional layer (3) which is applied to the substrate (2) and forms the outermost layer of the packaging film (1) at least in portions, the functional layer (3) comprising particles (4) as an antimicrobial and/or antifungal substance, of which the functional layer (3), which comprises particles (4), forms, at least in portions, the inside of the packaging (7) facing the goods, the packaging (7) being a blister pack comprising at least one base film (8) having a cavity (10) and a cover film (9) which is sealed to the base film (8) and covers the cavity (10), and the base film (8) and/or the cover film (9) being formed from the packaging film (1), **characterised in that** a sealing layer (6) is provided which forms the outermost layer of the packaging film (1) in portions and surrounds at least one functional layer, wherein the average thickness of the functional layer (3) is less than the median of the average diameter of the particles (4).

2. Packaging according to claim 1, **characterised in that** the particles (4) are silver metal particles and/or silver oxide particles, or **in that** the silver-containing particles (4) comprise silver metal and/or silver oxide.

3. Packaging according to any of the preceding claims, **characterised in that** the particles (4) comprise an inorganic or organic compound doped with at least one inorganic or organic substance having an antimicrobial and/or antifungal effect, or **in that** the particles consist of compounds of this type.

4. Packaging according to either claim 1 or claim 2, **characterised in that** the particles (4) comprise a silver-doped organic or inorganic compound, more particularly silver-doped silicon oxide, and/or a silver-oxide-doped organic or inorganic compound, more particularly silver-oxide-doped silicon oxide, or **in that** the silver-containing particles (4) consist of silver-doped organic or inorganic compounds, more particularly silver-doped silicon oxide, and/or of silver-oxide-doped organic or inorganic compounds.

5. Packaging according to any of the preceding claims, **characterised in that** the functional layer (3) is sealable.

6. Packaging according to any of the preceding claims, **characterised in that** the weight percentage of the particles (4) on the functional layer (3) is selected from a range of between approximately 0.5 % by weight and approximately 20 % by weight, preferably from a range of between approximately 1 % by weight and approximately 10 % by weight.

7. Packaging according to any of the preceding claims, **characterised in that** at least part, more particularly at least 10 %, preferably at least 20 %, more preferably at least 30 %, yet more preferably at least 40 %, most preferably at least 50 %, of the particles (4) form part of the outer surface (5) of the functional layer (3).

8. Packaging according to any of the preceding claims, **characterised in that** the average thickness of the particles (4) is 1 µm to 20 µm.

9. Packaging according to any of the preceding claims, **characterised in that** the ratio of the average thickness of the functional layer (3) to the median of the average diameter of the particles (4) is less than 0.8, preferably less than 0.5.

10. Packaging according to any of the preceding claims, **characterised in that** the functional layer (3) is formed from a varnish comprising the particles (4) or from a film comprising the silver-containing particles (4).

11. Packaging according to any of the preceding claims, **characterised in that** the functional layer (3) is applied to the substrate (2) by printing, doctoring, brushing, painting, spraying, pouring or by co-extrusion.

12. Packaging according to any of the preceding claims, **characterised in that** the substrate (2) comprises at least one functional layer (3), more particularly a barrier layer, more particularly that which is effective against oxygen and/or carbon dioxide and/or water, or is designed as such.

13. Packaging according to any of the preceding claims, **characterised in that** the substrate (2) and/or the functional layer (3) is/are structured.

14. Packaging according to any of the preceding claims, **characterised in that** the packaging is designed as food packaging, pharmaceutical product packaging or cosmetic packaging.

15. Packaging unit for goods comprising packaging (7) according to any of claims 1 to 14, **characterised in that** the functional layer (3), comprising silver-containing particles (4), of the packaging film (1) of the packaging (7) is in direct contact with the goods.

## Revendications

1. Emballage pour matériau à emballer, comprenant au moins une feuille d'emballage présentant un substrat mono- ou multi-couche (2) et une couche fonctionnelle anti-microbienne et/ou antifongique (3) formant une couche externe de la feuille d'emballage (1) appliquée au moins par parties sur le substrat, la couche fonctionnelle (3) présentant des particules (4) comme agent anti-microbien et/ou antifongique, dont la couche fonctionnelle (3) présentant des particules (4) forme, au moins par parties, le côté interne adjacent au matériau à emballer de l'emballage (7), l'emballage (7) étant un emballage blister avec au moins une feuille de fond (8) présentant une cavité (10) et une feuille de couvercle (9) recouvrant la cavité (10), scellée avec la feuille de fond (8), et la feuille de fond (8) et/ou la feuille de couvercle (9) étant formée par la feuille d'emballage (1),
**caractérisé en ce que**
il est prévu une couche de scellement (6) formant par parties une couche externe de la feuille d'emballage (1), laquelle entoure au moins une couche fonctionnelle, et l'épaisseur moyenne de la couche fonctionnelle (3) est inférieure à la valeur médiane des diamètres moyens des particules (4).

2. Emballage selon la revendication 1,
**caractérisé en ce que**,
les particules (4) sont formées comme des particules de métal d'argent et/ou comme des particules d'oxyde d'argent, ou **en ce que** les particules contenant de l'argent (4) comprennent du métal d'argent et/ou de l'oxyde d'argent.

3. Emballage selon l'une quelconque des revendications précédentes,
**caractérisé en ce que**
les particules (4) présentent un composé inorganique ou organique doté d'au moins une substance inorganique ou organique ayant une action antimicrobienne et/ou anti-fongique, ou **en ce que** les particules sont constituées de composés de ce type.

4. Emballage selon l'une quelconque des revendications 1 ou 2,
**caractérisé en ce que**
les particules (4) comprennent un composé organique ou inorganique doté d'argent, en particulier de l'oxyde de silicium doté d'argent, et/ou un composé organique ou inorganique doté d'oxyde d'argent, en particulier de l'oxyde de silicium doté d'oxyde d'argent, ou **en ce que** les particules (4) contenant de l'argent sont constituées de composés organiques ou inorganiques dotés d'argent, en particulier d'oxyde de silicium doté d'argent, et/ou de composés organiques ou inorganiques dotés d'oxyde d'argent.

5. Emballage selon l'une quelconque des revendications précédentes,
**caractérisé en ce que**
la couche fonctionnelle (3) est scellable.

6. Emballage selon l'une quelconque des revendications précédentes,
**caractérisé en ce que**
la part massique des particules (4) sur la couche fonctionnelle (3) est choisie dans un domaine de valeur d'environ 0,5 % en masse à environ 20 % en masse, de préférence dans un domaine de valeur d'environ 1 % en masse à environ 10 % en masse.

7. Emballage selon l'une quelconque des revendications précédentes,
**caractérisé en ce que**
au moins une partie, en particulier au moins 10 %, de préférence au moins 20 %, bien mieux encore au moins 30 %, particulièrement de préférence au moins 40 %, tout particulièrement de préférence au moins 50 %, des particules (4) forment une partie de la surface externe (5) de la couche fonctionnelle (3).

8. Emballage selon l'une quelconque des revendications précédentes,
**caractérisé en ce que**
l'épaisseur moyenne des particules (4) est de 1 µm jusqu'à 20 µm.

9. Emballage selon l'une quelconque des revendications précédentes,
**caractérisé en ce que**
la valeur de rapport de l'épaisseur moyenne de la couche fonctionnelle (3) et de la valeur médiane du diamètre moyen des particules (4) est inférieure à 0,8, de préférence inférieure à 0,5.

10. Emballage selon l'une quelconque des revendications précédentes,
**caractérisé en ce que**
la couche fonctionnelle (3) est formée d'un vernis présentant les particules (4), ou d'une feuille pelliculaire présentant les particules contenant de l'argent (4).

11. Emballage selon l'une quelconque des revendications précédentes,
**caractérisé en ce que**
la couche fonctionnelle (3) est appliquée par pression, racle, brosse, peinture, pulvérisation, coulée ou par coextrusion sur le substrat (2).

12. Emballage selon l'une quelconque des revendications précédentes,
**caractérisé en ce que**
le substrat (2) présente au moins une couche fonctionnelle (3), en particulier une couche barrière, active en particulier contre l'oxygène et/ou le dioxyde de carbone et/ou l'eau, ou est formé en tant que telle.

13. Emballage selon l'une quelconque des revendications précédentes,
**caractérisé en ce que**
le substrat (2) et/ou la couche fonctionnelle (3) est/sont structuré(s).

14. Emballage selon l'une quelconque des revendications précédentes,
**caractérisé en ce que**
l'emballage est formé comme emballage d'aliments, emballage de produits pharmaceutiques ou emballage de cosmétiques.

15. Unité de matériau à emballer-emballage avec un emballage (7) selon l'une des revendications 1 à 14,
**caractérisé en ce que**
la couche fonctionnelle (3) présentant des particules contenant de l'argent (4) de la feuille d'emballage (1) de l'emballage (7) a un contact direct avec le matériau à emballer.
